# FASCICULE DE BREVET EUROPEEN

(11) **EP 4 453 451 B1**
(45) Date de publication et mention de la délivrance du brevet: **04.02.2026**
(21) Numéro de dépôt: 22839761.8
(22) Date de dépôt: 16.12.2022
(51) Int. Cl.: F16H 63/08, F16H 63/30, F16H 63/38, F16H 61/34, F16H 63/50

(54) **VÉHICULE AUTOMOBILE HYBRIDE**
HYBRIDFAHRZEUG
HYBRID VEHICLE

(30) Priorité: 22.12.2021 FR 2114244
(43) Date de publication de la demande: 30.10.2024
(73) Titulaire: Horse Powertrain Solutions, S.L., 28108 Alcobendas, Madrid (ES)
(72) Inventeur: PREMIER, Emmanuel, 78084 GUYANCOURT (FR); RAOUL, Michel, 78084 GUYANCOURT (FR)
(74) Mandataire: Elzaburu S.L.P.
(86) Numéro de dépôt international: PCT/EP2022/086459
(87) Numéro de publication internationale: WO 2023/117793

(56) Documents cités:
- EP-A1- 1 508 728
- EP-A1- 2 169 280
- DE-A1- 102014 218 829
- DE-A1- 102016 125 096
- JP-B2- 3 456 681

## Description

La présente invention concerne le domaine des véhicules hybrides, et plus particulièrement la sélection du mode de propulsion de tels véhicules.

Les véhicules hybrides sont des véhicules comprenant à la fois un moteur thermique et un moteur électrique, tous deux dédiés à la propulsion du véhicule. Un utilisateur d'un véhicule hybride peut donc choisir entre d'une part un mode de propulsion thermique faisant intervenir le moteur thermique et d'autre part un mode de propulsion électrique faisant intervenir le moteur électrique.

Une sélection du mode de propulsion s'effectue généralement par l'intermédiaire d'une boîte de vitesses automatique, mais il est également possible de mettre en œuvre une boîte de vitesses manuelle équipée d'un sélecteur de vitesses. Lorsque le mode de propulsion thermique est sélectionné, un déplacement de ce sélecteur de vitesses par l'utilisateur entraîne, mécaniquement, un déplacement de pièces de transmission, comme des fourchettes ou des baladeurs, au sein de la boîte de vitesses ; or le mode de propulsion électrique impose que ces pièces de transmission ne soient pas sollicitées.

DE102014218829A1 concerne un actionneur d'actionnement, en particulier pour une transmission comportant un premier arbre et un deuxième arbre, comportant plusieurs paires de pignons fous et d'engrenages pour déterminer la translation de la transmission, un pignon fou respectif étant relié en rotation à l'un des arbres. au moyen d'un élément de commutation et en ce que la roue dentée est reliée de manière fixe en rotation à l'autre des arbres, une machine électrique pouvant être reliée de manière fixe en rotation au moyen d'un premier engrenage fou au premier arbre et au moyen d'un deuxième pignon fou au deuxième arbre au moyen d'éléments de commutation est, dans lequel l'actionneur d'actionnement comporte des moyens déplaçables ou rotatifs, au moyen desquels les éléments de commutation peuvent être sélectionnés pour la sélection du rapport de transmission et peuvent être actionnés pour une entrée ou une interprétation de la translation, et au moyen desquels les éléments de commutation peuvent être sélectionnés et actionnés pour relier la machine électrique à un arbre de la transmission.

EP2169280A1 concerne une transmission, dans laquelle l'installation d'un actionneur qui est adapté en position et en phase peut être facilement réalisée sans fournir de mécanisme de positionnement, est dotée d'un arbre de sélection de changement de vitesse (20) qui établit une opération de changement de vitesse, d'un actionneur de changement de vitesse et de sélection qui déplace l'arbre de sélection de changement de vitesse (20) pendant le changement de vitesse, et d'un boîtier (60) qui renferme l'arbre de sélection de changement de vitesse (20) et l'actionneur de changement de vitesse et de sélection. L'arbre de sélection de changement de vitesse (20) comprend une butée (29) qui vient en butée contre le boîtier (60) et limite le mouvement de l'arbre de sélection de changement de vitesse (20). Le boîtier (60) comprend une surface de butée (62) contre laquelle la butée (29) vient en butée. La surface de butée (62) est formée dans une position à l'extérieur d'une plage de déplacement de l'arbre dans laquelle l'arbre de sélection de changement de vitesse (20) peut se déplacer pendant le changement de vitesse.

DE102016125096A1 concerne une chaîne cinématique (1) pour un véhicule automobile, comprenant un actionneur (3) comportant un arbre de commutation (2), un élément de commutation (4) de l'actionneur (3) étant couplé à l'arbre de commutation (2). de telle sorte que l'élément de commutation (4), lors d'un processus de sélection de l'actionneur (3), dans une direction axiale de l'arbre de commutation (2), dans au moins un plan d'actionnement (5, 6, 7, 8, 9, 10 ) et lors d'un processus de commutation, l'actionneur (3) est mobile dans au moins un plan d'actionnement (5, 6, 7, 8, 9, 10), l'actionneur (3) étant conçu et fixé de telle sorte que l'élément de commutation (4 ) dans un premier niveau d'actionnement (5), interagit avec un embrayage (13) disposé entre une machine électrique (11) et une partie rotative (12) de la chaîne cinématique (1).

Il est alors nécessaire de recourir à un système qui d'une part autorise le déplacement des pièces de transmission lors de l'utilisation du mode de propulsion thermique et d'autre part s'assure que ces pièces ne sont pas entraînées lors de l'utilisation du mode de propulsion électrique, par exemple en recourant à un mécanisme de détection.

La présente invention a ainsi pour principal objet un véhicule automobile hybride selon la revendication 1.

La boîte de vitesses manuelle du véhicule, ici un véhicule hybride, comprend un sélecteur de vitesses actionnable par un utilisateur de ce véhicule. Le déplacement de ce sélecteur de vitesses entraîne le déplacement du levier de sélection, et plus particulièrement du doigt d'engagement de ce levier de sélection. Ce doigt d'engagement peut prendre plusieurs positions lors de ses déplacements, parmi lesquelles une première position configurée pour autoriser une propulsion électrique du véhicule et une pluralité d'autres positions configurées pour commander une vitesse de la boîte de vitesses manuelle. Ainsi, lorsque le doigt d'engagement est dans la première position, le véhicule peut par exemple avancer ou reculer en utilisant un mode de propulsion électrique, faisant intervenir un moteur électrique. A l'inverse, lorsque le doigt d'engagement est dans l'une quelconque de la pluralité d'autres positions, c'est-à-dire lorsqu'il commande l'une des vitesses, le véhicule peut avancer ou reculer en utilisant un mode de propulsion thermique, faisant intervenir un moteur à combustion interne. Il est cependant nécessaire de s'assurer que lorsque le doigt d'engagement est dans la première position, à savoir lorsque le mode de propulsion électrique est sélectionné, les vitesses du mode de propulsion thermique ne peuvent pas être engagées, étant entendu que cela entraînerait un déplacement de pièces de transmission au sein de la boîte de vitesses qui ne serait pas compatible avec l'utilisation du mode de propulsion électrique. Le levier de sélection dispose à cet effet d'un moyen empêchant la commande d'une vitesse de la boîte de vitesses manuelle lorsque le doigt d'engagement est dans sa première position. Selon un exemple, le moyen empêchant la commande d'une vitesse de la boîte de vitesses manuelle lorsque le doigt d'engagement est dans sa première position est un moyen mécanique.

Un tel levier de sélection permet donc d'alterner entre le mode de propulsion thermique et le mode de propulsion électrique de façon sécurisée.

Selon une caractéristique de l'invention, le levier de sélection comprend au moins un capteur de position du doigt d'engagement configuré pour détecter au moins la première position et informer le véhicule du passage en propulsion électrique.

Ce capteur de position permet donc de détecter lorsque le véhicule passe en mode de propulsion électrique et en informe le véhicule, voire l'utilisateur de ce véhicule.

Selon une autre caractéristique de l'invention, le levier de sélection comprend un support rotatif sur lequel est monté le doigt d'engagement.

Un changement de position du doigt d'engagement, par exemple depuis la première position vers l'une de la pluralité de positions configurées pour commander une vitesse de la boîte de vitesses manuelle, est ainsi opéré par une rotation du support rotatif. Selon une caractéristique de l'invention, le moyen interdisant la commande d'une vitesse de la boîte de vitesses manuelle lorsque le doigt d'engagement est dans la première position prend la forme d'un secteur angulaire, ce secteur angulaire étant adapté pour bloquer une pluralité de fourchettes d'engagement de vitesses disposées dans la boîte de vitesses manuelle. Dans une telle situation, les fourchettes sont maintenues en leur point neutre par le secteur angulaire.

Ces fourchettes d'engagement de vitesses sont mises en œuvre lorsque le doigt d'engagement est dans l'une de la pluralité de positions configurées pour commander une vitesse de la boîte de vitesses manuelle ; ce sont des pièces de transmission qui participent à transmettre un couple provenant du moteur thermique. Elles sont à cet effet aptes à coopérer avec le doigt d'engagement, par exemple par l'intermédiaire d'encoches portés par elles dans lesquels le doigt d'engagement vient en prise. Lorsque le doigt d'engagement est dans la première position, il ne peut pas coopérer ces fourchettes et transmettre le couple du moteur thermique.

On comprend ainsi que la première position, configurée pour autoriser la propulsion électrique, correspond à une absence d'association entre le doigt d'engagement et l'une quelconque des fourchettes d'engagement. Selon l'invention, cette absence d'association est sécurisée par le secteur d'angulaire, qui peut coopérer avec les fourchettes d'engagement à la place du doigt d'engagement afin de les bloquer. Le secteur angulaire peut donc, selon le mode de propulsion, verrouiller ou déverrouiller les fourchettes d'engagement.

Selon la présente invention, le doigt d'engagement prend une deuxième position configurée pour autoriser la propulsion électrique, la première position correspondant à un déplacement vers l'avant du véhicule et la deuxième position correspondant à un déplacement vers l'arrière du véhicule.

On comprend ainsi que la première position utilise le moteur électrique pour faire avancer le véhicule tandis que la deuxième position l'utilise pour faire reculer ce véhicule.

Selon une caractéristique, le capteur de position du doigt d'engagement est configuré pour détecter la deuxième position et informer le véhicule du passage en propulsion électrique.

De la même façon que pour la première position, le capteur de position détecte lorsque le véhicule utilise le mode de propulsion électrique pour reculer et en informe le véhicule et par extension son utilisateur.

Selon une caractéristique de l'invention, le capteur de position du doigt d'engagement est configuré pour détecter le rapport de boîte de vitesses manuelle engagée et informer le véhicule de l'utilisation de la boîte de vitesses manuelle.

Le capteur de position est donc notamment configuré pour détecter une association ou une absence d'association entre le doigt d'engagement et une fourchette d'engagement.

Selon une autre caractéristique de l'invention, le capteur de position est un capteur sans contact.

A titre d'exemple, le capteur de position peut être un capteur à effet Hall.

Selon une caractéristique de l'invention, le support rotatif est porteur d'une piste magnétique, le capteur de position comprenant un détecteur de cette piste magnétique.

Le détecteur du capteur de position est ainsi capable de détecter un champ magnétique de cette piste magnétique, ce champ magnétique étant variable sur une surface de la piste magnétique. Différentes valeurs du champ magnétique correspondent aux différentes positions que peut prendre le doigt d'engagement, et la reconnaissance de l'une de ces valeurs permet au capteur de position de déterminer la position spécifique dans laquelle se trouve le doigt d'engagement.

Selon une caractéristique, un système de billage verrouille la première et/ ou la deuxième position du doigt d'engagement.

Ce système de billage est, à l'instar du doigt d'engagement, porté par le support rotatif. Lors d'une rotation, il peut mettre en relation angulaire le doigt d'engagement et l'une des fourchettes d'engagement pour le mode de propulsion thermique, ou au contraire décaler angulairement le doigt d'engagement par rapport à ces fourchettes d'engagement pour le mode de propulsion électrique. On entend ici par « relation angulaire » que le doigt d'engagement est disposé par rapport à l'une des fourchettes d'engagement de façon à pouvoir coopérer avec son encoche.

Selon une caractéristique de l'invention, le levier de sélection est commandé par un dispositif de sélection d'un mode de propulsion du véhicule parmi un mode de propulsion par le moteur à combustion interne relié à la boîte de vitesses manuelle et le mode de propulsion électrique, ce dispositif de sélection du mode de propulsion étant configuré pour être commandé par au moins un sélecteur de vitesses.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] est une vue de coupe longitudinale d'une boîte de vitesses manuelle ;
[Fig. 2] illustre, schématiquement, un levier de sélection, qui fait partie d'un véhicule automobile hybride selon l'invention, disposé dans la boîte de vitesses manuelle de la figure 1, un doigt d'engagement de ce levier de sélection étant dans une première position ;
[Fig. 3] est une représentation schématique du levier de sélection de la figure 2 selon une coupe transversale, en vue d'ensemble ;
[Fig. 4] illustre, schématiquement, le levier de sélection de la figure 1 en vue de coupe longitudinale ;
[Fig. 5] est une représentation schématique du levier de sélection selon une coupe transversale, le doigt d'engagement du levier de sélection étant dans une autre position ;
[Fig. 6] est une autre représentation schématique du levier de sélection selon une coupe transversale, le doigt d'engagement du levier de sélection étant dans encore une autre position ;
[Fig. 7] est une autre représentation schématique du levier de sélection selon une coupe transversale, le doigt d'engagement du levier de sélection étant dans encore une autre position ;
[Fig. 8] est une autre représentation schématique du levier de sélection selon une coupe transversale, le doigt d'engagement du levier de sélection étant dans encore une autre position ;
[Fig. 9] est une représentation schématique d'un dispositif de sélection, qui ne fait pas partie de la présente invention.

Sur les figures, les éléments communs à plusieurs figures conservent la même référence.

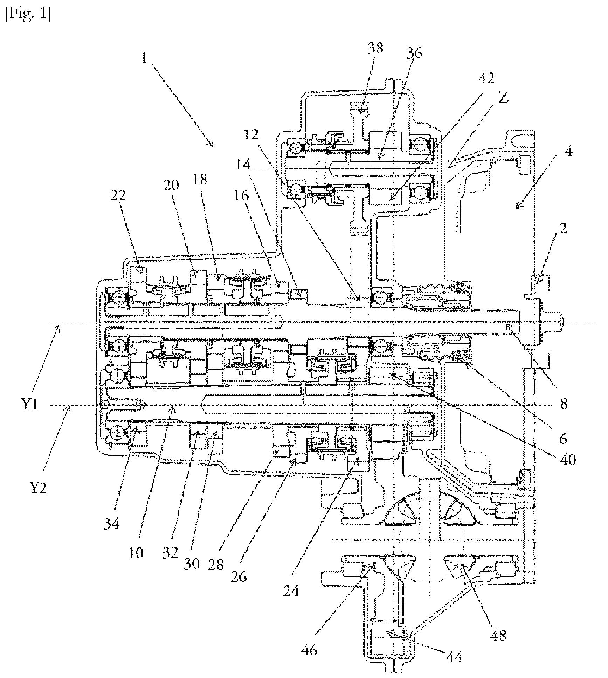

La figure 1 illustre ainsi, schématiquement, une boîte de vitesses manuelle 1 selon une vue de coupe longitudinale, cette boîte de vitesses manuelle 1 pouvant par exemple être intégrée dans un véhicule automobile. Selon la présente invention, un tel véhicule automobile est de type hybride et comprend deux moyens de propulsion, avec ici un moteur à combustion interne illustré schématiquement par la référence 2, et un moteur électrique non représenté sur les figures. On comprend donc que le véhicule peut se déplacer soit selon un mode de propulsion thermique faisant intervenir le moteur à combustion interne 2, soit selon un mode de propulsion électrique faisant intervenir le moteur électrique.

La boîte de vitesses manuelle 1 est entraînée par le moteur à combustion interne 2. Le moteur à combustion interne 2 porte un dispositif d'embrayage 4 qui est actionné par un vérin hydraulique 6. Ce vérin hydraulique 6 peut par exemple être commandé par un utilisateur du véhicule automobile hybride équipé de la boîte de vitesses manuelle 1 lorsque cet utilisateur actionne une pédale d'embrayage du véhicule automobile hybride.

La boîte de vitesses manuelle 1 permet de transmettre un couple issu du moteur à combustion interne 2 aux roues du véhicule. Plus particulièrement, ce couple est notamment transmis à un arbre primaire 8 et à un arbre secondaire 10. Arbre primaire 8 et arbre secondaire 10 sont respectivement centrés sur un premier axe de pivotement Y1 et un deuxième axe de pivotement Y2.

La boîte de vitesses manuelle 1 comporte plusieurs rapports de vitesses, avec ici un premier rapport, un deuxième rapport, un troisième rapport, un quatrième rapport, un cinquième rapport, un sixième rapport et une marche arrière. Cette marche arrière permet un déplacement du véhicule automobile hybride vers l'arrière de ce véhicule, tandis que les autres rapports génèrent un déplacement du véhicule automobile hybride vers l'avant.

À cet effet, l'arbre primaire 8 porte des pignons fixes 12, 14 avec un premier pignon fixe 12 pour la première vitesse et un deuxième pignon fixe 14 pour la deuxième vitesse. L'arbre primaire 8 est par ailleurs porteur de quatre pignons fous, avec un premier pignon fou 16 pour la troisième vitesse, un deuxième pignon fou 18 pour la quatrième vitesse, un troisième pignon fou 20 pour la cinquième vitesse et un quatrième pignon fou 22 pour la sixième vitesse. Ces pignons 12, 14, 16, 18, 20, 22 sont aptes à coopérer avec des dentures de l'arbre secondaire 10. Plus particulièrement, ils sont aptes à coopérer avec des dentures folles 24, 26 parmi lesquelles une première denture folle 24 pour la première vitesse et une deuxième denture folle 26 pour la deuxième vitesse, ainsi que des dentures fixes 28, 30, 32, 34 comprenant une première denture fixe 28 pour la troisième vitesse, une deuxième denture fixe 30 pour la quatrième vitesse, une troisième denture fixe 32 pour la cinquième vitesse et une quatrième denture fixe 34 pour la sixième vitesse.

La marche arrière peut quant à elle être engagée par l'intermédiaire d'un arbre tertiaire 36, distinct des arbres primaire 8 et secondaire 10 et dont un axe de pivot Z est parallèle aux premier et deuxième axes de pivotement Y1, Y2. Cet arbre tertiaire 36 comprend un pignon 38 apte à coopérer avec la denture folle 24 de l'arbre secondaire 10.

Par ailleurs, l'arbre secondaire 10 et l'arbre tertiaire 36 présentent chacun une roue dentée 40, 42 apte à coopérer avec une couronne de différentiel 44. Cette couronne de différentiel 44 est comprise dans un boîtier 46 qui renferme également un mécanisme de répartition du couple 48 à des roues du véhicule automobile hybride.

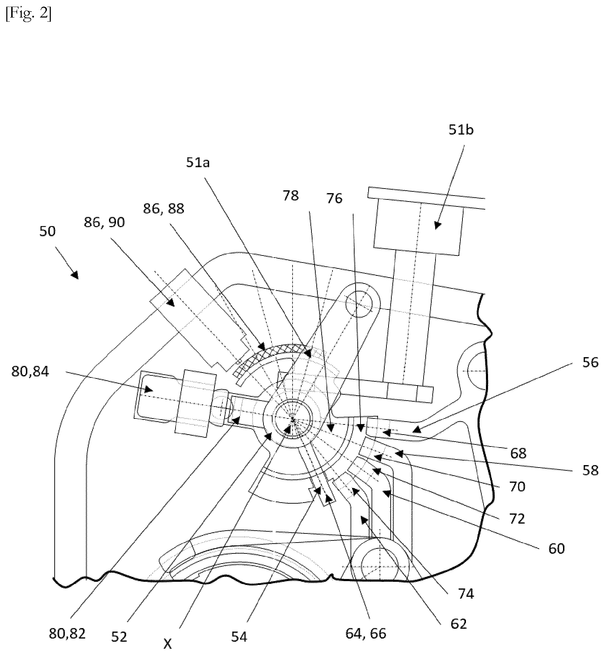

Une sélection parmi les différents rapports de la boîte de vitesses manuelle 1 est opérée par l'intermédiaire d'un levier de sélection 50, qui sera décrit en relation avec les figures 2 à 8. Ce levier de sélection 50 est relié à un sélecteur de vitesses 51, qui peut être actionné par l'utilisateur du véhicule automobile hybride. Ce sélecteur de vitesses 51 coopère avec le levier de sélection 50 via un premier levier de rotation 51a et un deuxième levier de translation 51b afin de permettre respectivement le déplacement en rotation et la translation du doigt de sélection 54 selon l'axe de rotation X. Ce sélecteur de vitesses 51 participe de ce fait à la sélection des vitesses de la boîte de vitesses manuelle 1 pour la propulsion thermique du véhicule automobile hybride, mais il peut par ailleurs participer à la sélection de la propulsion électrique.

Le levier de sélection 50 comprend un support rotatif 52, ici un élément de forme tubulaire, qui pivote autour d'un axe de rotation X parallèle aux axes de pivotement Y1, Y2 et à l'axe de pivot Z. Le support rotatif 52 peut en outre effectuer une translation selon cet axe de rotation X. Le support rotatif 52 du levier de sélection 50 porte un doigt d'engagement 54, qui est également un élément de forme tubulaire. Ce doigt d'engagement 54 peut donc se déplacer selon des mouvements de rotation et/ ou de translation par rapport à l'axe de rotation X. De tels déplacements permettent au doigt d'engagement 54 de coopérer avec des fourchettes d'engagement des rapports de la boîte de vitesses manuelle 1, au moins une portion des fourchettes d'engagement étant alignée radialement dans un plan perpendiculaire aux axes de rotation X, de pivotement Y1, Y2 et de pivot Z. Parmi ces fourchettes d'engagement, on trouve une première fourchette d'engagement 56 qui correspond à la marche arrière, une deuxième fourchette d'engagement 58 qui correspond aux première et deuxième vitesses, une troisième fourchette d'engagement 60 qui correspond aux troisième et quatrième vitesses et une quatrième fourchette d'engagement 62 qui correspond aux cinquième et sixième vitesses, selon une pluralité de positions du doigt d'engagement 54 qui seront décrites plus en détail par la suite. On entend ici par « coopérer » que le doigt d'engagement 54 peut venir en prise dans des organes de pilotage de ces fourchettes d'engagement 56, 58, 60, 62 de sorte à, in fine, transmettre le couple issu du moteur à combustion interne 2.

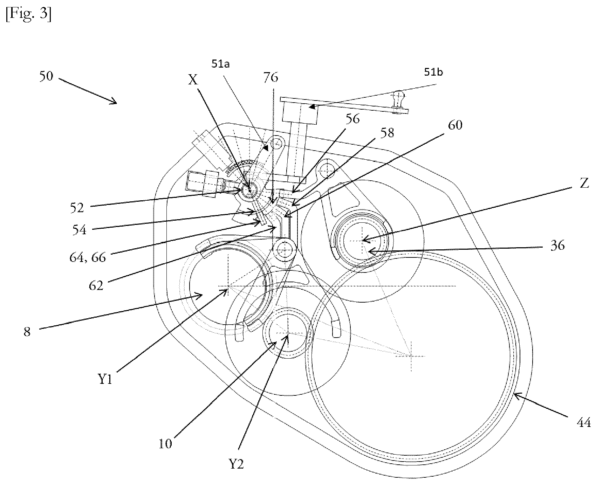

Tel qu'évoqué précédemment et dans le cas d'un véhicule automobile hybride, la propulsion peut être assurée par l'intermédiaire du moteur à combustion interne 2 et de la boîte de vitesses manuelle 1, ainsi que par le moteur électrique. Une telle propulsion par le moteur électrique induit que le couple du moteur à combustion interne 2 ne soit pas transmis aux roues du véhicule. A cet effet, le doigt d'engagement 54 est apte à prendre au moins une position dans laquelle il ne coopère avec aucune des fourchettes d'engagement 56, 58, 60, 62, cette position correspondant au mode de propulsion électrique et étant illustrée aux figures 2 et 3.

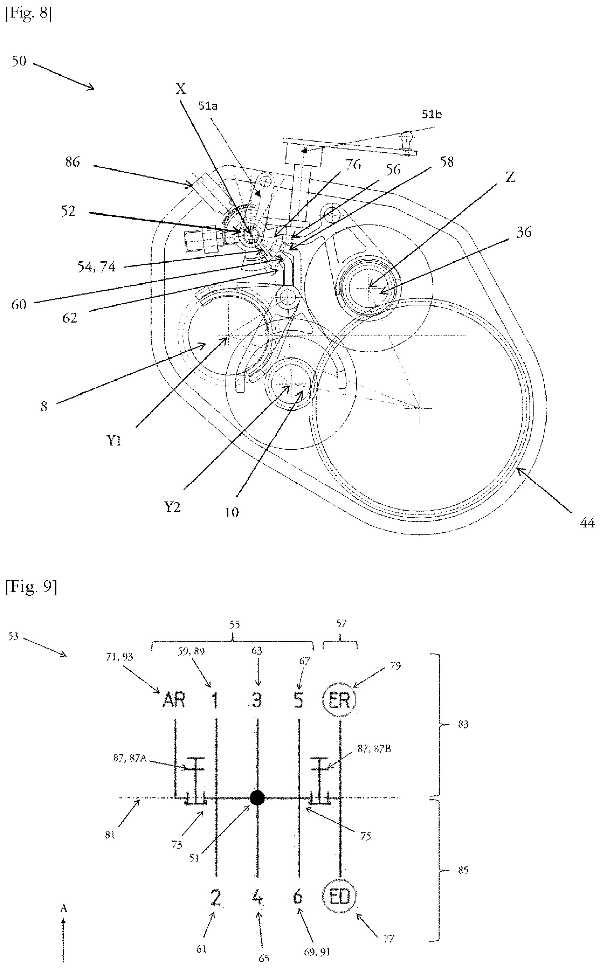

On comprend ainsi qu'en sus de la sélection parmi les vitesses de la boîte de vitesses manuelle 1, le levier de sélection 50 permet, en déplaçant le doigt d'engagement 54, de choisir entre d'une part le mode de propulsion faisant intervenir le moteur à combustion interne 2 et d'autre part le mode de propulsion faisant intervenir le moteur électrique. Ainsi, le sélecteur de vitesses 51 peut commander un dispositif de sélection 53 du mode de propulsion de véhicule parmi le mode de propulsion thermique par le moteur à combustion interne 2 relié à la boîte de vitesses manuelle 1 et le mode de propulsion électrique par le moteur électrique. Un tel dispositif de sélection 53 peut par exemple correspondre à une grille en H, un actionnement du sélecteur de vitesses 51 au sein de cette grille en H entraînant un déplacement du doigt d'engagement 54 dans la boîte de vitesses manuelle 1. Ce dispositif de sélection 53 sera décrit par la suite en relation avec la figure 9.

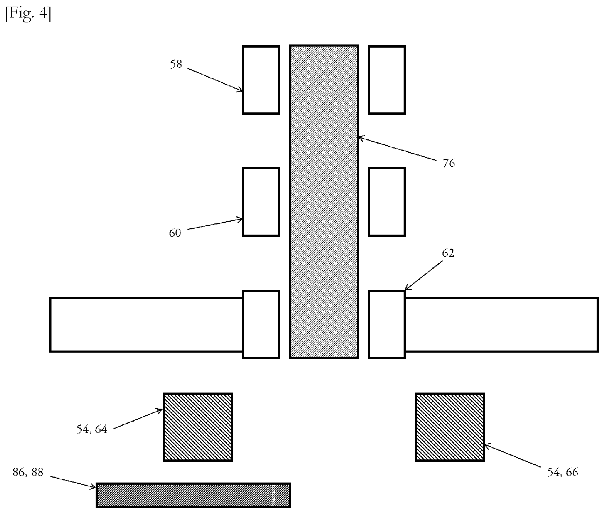

Les figures 2 et 3 illustrent donc une position du doigt d'engagement 54 configurée pour autoriser la propulsion électrique du véhicule automobile hybride. Cette position du doigt d'engagement 54 peut être une première position angulaire 64 correspondant à un déplacement vers l'avant du véhicule automobile hybride, ou encore une deuxième position angulaire 66 correspondant à un déplacement vers l'arrière du véhicule, au moyen de la propulsion électrique. On comprend ainsi que la première position angulaire 64 utilise le moteur électrique pour faire avancer le véhicule automobile hybride tandis que la deuxième position angulaire 66 l'utilise pour faire reculer ce véhicule. De telles positions angulaires 64, 66 sont plus particulièrement illustrées de façon schématique à la figure 4, qui montre une portion du levier de sélection 50 selon une vue de coupe. Sur cette figure, le doigt d'engagement 54 est représenté à la fois dans sa première position angulaire 64 et dans sa deuxième position angulaire 56, mais on comprend que lors du fonctionnement du levier de sélection 50 le doigt d'engagement 54 ne peut prendre que l'une de ces positions angulaires 64, 66 à la fois.

La première position angulaire 64 et la deuxième position angulaire 66 du doigt d'engagement 54 correspondent à une absence de coopération entre ce doigt d'engagement 54 et l'une quelconque des fourchettes d'engagement 56, 58, 60, 62. Lorsque le doigt d'engagement 54 est dans l'une ou l'autre de cette première position angulaire 64 ou deuxième position angulaire 66, le couple du moteur à combustion interne 2 n'est donc pas transmis aux roues via la boîte de vitesses manuelle 1.

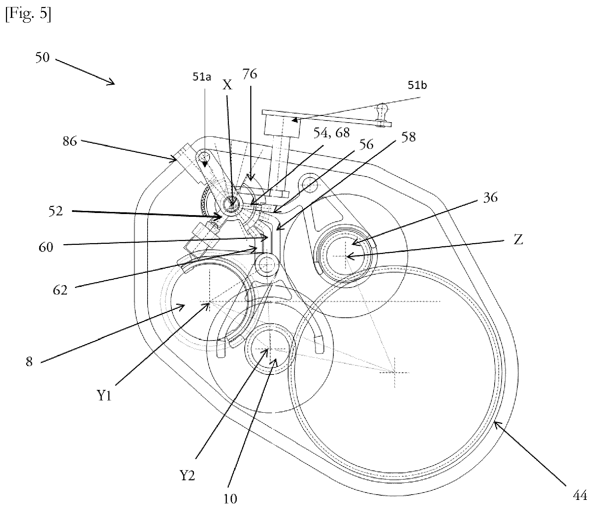

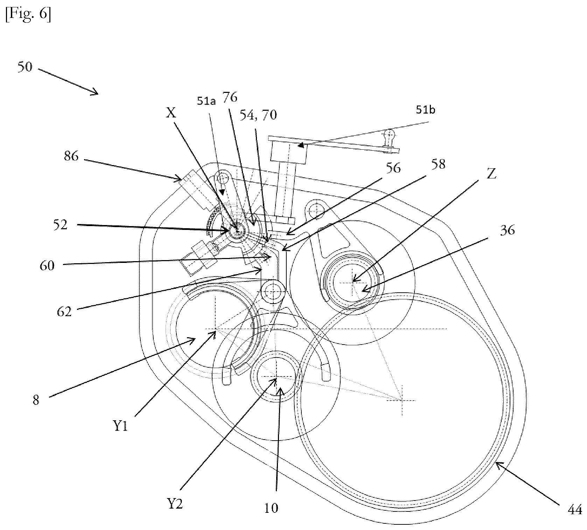

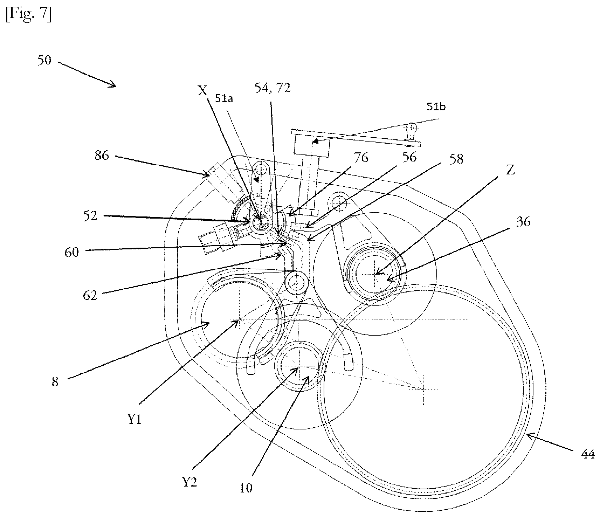

A l'inverse, le couple issu du moteur à combustion interne 2 peut être transmis lorsque le doigt d'engagement 54 coopère avec l'une des fourchettes d'engagement 56, 58, 60, 62. La figure 5 illustre la boîte de vitesses manuelle 1 avec le doigt d'engagement 54 coopérant avec la première fourchette d'engagement 56, la figure 6 illustrant le doigt d'engagement 54 coopérant avec la deuxième fourchette d'engagement 58, la figure 7 illustrant le doigt d'engagement 54 coopérant avec la troisième fourchette d'engagement 60 et la figure 8 illustrant le doigt d'engagement 54 coopérant avec la quatrième fourchette d'engagement 62. Le doigt d'engagement 54 est ainsi dans une troisième position angulaire 68 lorsqu'il coopère avec la première fourchette d'engagement 56, dans une quatrième position angulaire 70 lorsqu'il coopère avec la deuxième fourchette d'engagement 58, dans une cinquième position angulaire 72 lorsqu'il coopère avec la troisième fourchette d'engagement 60 et dans une sixième position angulaire 74 lorsqu'il coopère avec la quatrième fourchette d'engagement 62.

Lorsque le doigt d'engagement 54 est dans la troisième position angulaire 68 comme visible sur la figure 5, il coopère donc avec la première fourchette d'engagement 56 pour entraîner en rotation l'arbre tertiaire 36 selon l'axe de pivot Z, cet arbre tertiaire 36 entraînant à son tour la couronne de différentiel 44 afin de transmettre le couple aux roues du véhicule automobile hybride par le biais du mécanisme de répartition du couple 48.

De la même façon, lorsque le doigt d'engagement 54 est dans l'une de la quatrième, cinquième ou sixième position angulaire 70, 72, 74, il coopère respectivement avec la deuxième fourchette d'engagement 58, la troisième fourchette d'engagement 60 ou la quatrième fourchette d'engagement 62 de façon à entraîner en rotation l'arbre primaire 8 selon le premier axe de pivotement Y1 ou l'arbre secondaire 10 selon le deuxième axe de pivotement Y2, qui à leur tour entraînent la couronne de différentiel 44 afin de transmettre le couple aux roues du véhicule automobile hybride.

Selon l'invention, afin de s'assurer que lorsque le doigt d'engagement 54 est dans l'une des positions angulaires 64 ou 66 correspondant au mode de propulsion électrique, les vitesses de la boîte de vitesses manuelle 1 ne peuvent pas être engagées. Le levier de sélection 50 comprend un moyen interdisant la commande d'une de ces vitesses lorsque le doigt d'engagement 54 est dans la première position angulaire 64 ou dans la deuxième position angulaire 66. Un tel moyen permet notamment de sécuriser l'utilisation de chacun des modes de propulsion du véhicule automobile hybride, l'un par rapport à l'autre.

Le moyen interdisant la commande d'une des vitesses de la boîte de vitesses manuelle 1 lorsque le doigt d'engagement 54 est dans la première position angulaire 64 ou dans la deuxième position angulaire 66 peut par exemple prendre la forme d'au moins un secteur angulaire 76, qui correspond à une portion de disque sensiblement plane. Ce secteur angulaire 76 est visible sur les figures 2 à 8 et est porté par un élément rotatif 78. Un tel élément rotatif 78 peut, à l'instar du support rotatif 52, effectuer une rotation autour de l'axe de rotation X, mais il se distingue de ce support rotatif 52 en ce que sa translation le long de l'axe de rotation X est bloquée. Selon l'invention, le secteur angulaire 76 est adapté pour bloquer les fourchettes d'engagement 56, 58, 60, 62 de la boîte de vitesses manuelle 1 en effectuant une rotation autour de cet axe de rotation X, c'est-à-dire qu'il peut coopérer avec elles à la place du doigt d'engagement 54 lorsque celui-ci est dans sa première position angulaire 64 ou dans sa deuxième position angulaire 66. En d'autres termes, le secteur angulaire 76 peut, selon le mode de propulsion du véhicule automobile hybride, verrouiller ou déverrouiller les fourchettes d'engagement 56, 58, 60, 62. Un verrouillage de ces fourchettes d'engagement 56, 58, 60, 62 de la boîte de vitesses manuelle 1 est particulièrement visible en figure 4, correspondant à une position neutre de ces fourchettes.

Un passage de la première position angulaire 64 du doigt d'engagement 54 à la deuxième position angulaire 66 et inversement est assuré par la translation du support rotatif 52 le long de l'axe de rotation X. Par ailleurs, un passage de l'une à l'autre des positions angulaires 68, 70, 72, 74 du doigt d'engagement 54 correspondant à un changement de vitesse de la boîte de vitesses manuelle 1 est assuré par la rotation du support rotatif 52 autour de cet axe de rotation X.

La position du doigt d'engagement 54 peut être verrouillée par un système de billage 80, particulièrement visible en figure 2. Ce système de billage 80 comprend des rampes de billage 82 qui sont portées par le support rotatif 52, de telles rampes de billage 82 pouvant interagir avec un billage 84 porté par l'élément rotatif 78. Une telle interaction entre ces rampes de billage 82 et ce billage 84 permettent de stabiliser le support rotatif 52, et ainsi de verrouiller le doigt d'engagement 54 dans l'une de ses positions.

La position prise par le doigt d'engagement 54 peut être détectée par un capteur de position 86. Un tel capteur de position 86 est ainsi configuré pour détecter au moins la première position angulaire 64 et la deuxième position angulaire 66 qui correspondent au mode de propulsion électrique, de sorte à pouvoir en informer le véhicule automobile hybride et ainsi utiliser le secteur angulaire 76 pour bloquer les fourchettes d'engagement 56, 58, 60, 62 en conséquence. Ce capteur de position 86 peut en outre être configuré pour détecter l'engagement d'une vitesse de la boîte de vitesses manuelle 1, c'est-à-dire la coopération entre le doigt d'engagement 54 et l'une quelconque des fourchettes d'engagement 56, 58, 60, 62, et informer le véhicule automobile hybride de l'utilisation du mode de propulsion thermique, et de la vitesse engagée. On comprend ainsi que le capteur de position 86 est configuré pour détecter une coopération ou une absence de coopération entre le doigt d'engagement 54 et une fourchette d'engagement 56, 58, 60, 62.

À cet effet, le support rotatif 52 est porteur d'une piste magnétique 88, dont un détecteur 90 du capteur de position 86 peut détecter le champ magnétique. Le capteur de position 86 comprend donc à la fois la piste magnétique 88 et le détecteur 90, qui peut par exemple faire intervenir un capteur sans contact tel qu'un capteur à effet Hall.

Le capteur de positions 86 devant être capable de détecter plusieurs positions du doigt d'engagement 54, la piste magnétique 88 ne présente pas un champ magnétique uniforme sur toute sa surface. Chaque position du doigt d'engagement 54 est ainsi associée à une valeur de champ magnétique différente. Le détecteur 90 est donc capable, en fonction de la valeur de champ magnétique détectée, de déterminer la position du doigt d'engagement 54.

Comme évoqué précédemment, un actionnement du sélecteur de vitesses 51 au sein du dispositif de sélection 53 représenté à la figure 9 entraîne un déplacement du doigt d'engagement 54 dans la boîte de vitesses manuelle 1. Le dispositif de sélection 53 end un premier schéma de sélection 55 entre les différentes vitesses qui correspondent aux rapports de la boîte de vitesses manuelle 1 et un deuxième schéma de sélection 57 entre au moins deux modes de propulsion électrique, le sélecteur de vitesses 51 pouvant se déplacer au sein de l'un ou l'autre des schémas de sélection 55, 57. Le premier schéma de sélection 55 est dédié au mode de propulsion thermique et est donc relié à la boîte de vitesses manuelle 1 ; à ce titre, il coopère avec les différents rapports de cette boîte de vitesses manuelle 1. Le premier schéma de sélection 55 comprend à cet effet sept emplacements correspondant chacun à un rapport de la boîte de vitesses manuelle 1, parmi lesquels six emplacements 59, 61, 63, 65, 67, 69 pour les vitesses de marche avant et un emplacement 71 pour la vitesse de marche arrière 93. Le premier emplacement 59, correspondant à une vitesse basse 89, est disposé à une première extrémité 73 du premier schéma de sélection 55 tandis que le sixième emplacement 69, correspondant à une vitesse haute 91, est disposé à une deuxième extrémité 75 du premier schéma de sélection 55. Le septième emplacement 71 qui correspond à la vitesse de marche arrière 93 est disposé à la première extrémité 73 du premier schéma de sélection 55.

Le deuxième schéma de sélection 57 est quant à lui dédié au mode de propulsion électrique. Ce deuxième schéma de sélection 57 est disposé à côté du premier schéma de sélection 55, au voisinage de sa deuxième extrémité 75, par exemple latéralement à droite du premier schéma de sélection 55. Le deuxième schéma de sélection 57 comprend deux emplacements 77, 79 qui correspondent chacun à un mode de propulsion électrique, avec un huitième emplacement 77 pour l'engagement d'un premier mode de propulsion électrique et un neuvième emplacement 79 pour l'engagement d'un deuxième mode de propulsion électrique.

Tel que visible à la figure 9, la répartition des emplacements 59, 61, 63, 65, 67, 69, 71, 77, 79 des schémas de sélection 55, 57 s'effectue par rapport à un plan de séparation 81 qui s'étend selon la direction perpendiculaire à une direction principale d'allongement A du véhicule automobile hybride. Le premier emplacement 59 de la première vitesse, le troisième emplacement 63 de la troisième vitesse, le cinquième emplacement 67 de la cinquième vitesse, le septième emplacement 71 de la vitesse de marche arrière 93 et le neuvième emplacement 79 du deuxième mode de propulsion électrique sont disposés d'un premier côté 83 du plan de séparation 81, tandis que le deuxième emplacement 61 de la deuxième vitesse, le quatrième emplacement 65 de la quatrième vitesse, le sixième emplacement 69 de la sixième vitesse et le huitième emplacement 77 du premier mode de propulsion électrique sont disposés d'un deuxième côté 85 du plan de séparation 81. On notera ainsi que les emplacements 71 et 79 de la vitesse de marche arrière 93 et du deuxième mode de propulsion électrique correspondant à un déplacement vers l'arrière du véhicule automobile hybride sont disposés du même côté du plan de séparation 81, ici le premier côté 83.

Des passages du premier schéma de sélection 55 au deuxième schéma de sélection 57 d'une part, et au sein du premier schéma de sélection 55 d'autre part, ne sont pas libres. On entend ici que de tels passages requièrent une action de l'utilisateur sur le dispositif de sélection 53. En effet, celui-ci comprend un moyen de sécurisation, qui dans une première position empêche le passage du sélecteur de vitesses 51 d'un schéma de sélection 55, 57 à l'autre ainsi que le passage de ce sélecteur de vitesses 51 jusqu'au septième emplacement 71 de vitesse de marche arrière 93. A l'inverse, dans une deuxième position de ce moyen de sécurisation, ces deux déplacements sont autorisés. Ce moyen de sécurisation peut par exemple être une gâchette 87, qui est représentée de façon schématique à la figure 9. Cette gâchette 87 y est illustrée à deux emplacements 87A et 87B, chacun correspondant à un endroit du dispositif de sélection 53 où le passage de la première position à la deuxième position est requis pour autoriser le déplacement du sélecteur de vitesses 51. Ainsi, un premier emplacement 87A de la gâchete 87 est représenté à la première extrémité 73 du premier schéma de sélection 55 pour le passage du sélecteur de vitesses 51 vers le septième emplacement 71 de la vitesse de marche arrière 93, un deuxième emplacement 87B de la gâchette 87 étant représenté au voisinage de la deuxième extrémité 75 du premier schéma de sélection 55 pour le passage du sélecteur de vitesses 51 vers les huitième et neuvième emplacements 77, 79 correspondant aux deux modes de propulsion électrique. On comprend toutefois qu'il ne s'agit que d'une représentation schématique et qu'il existe une unique gâchete 87 disposée sur le sélecteur de vitesses 51.

La présente invention ne saurait toutefois se limiter aux moyens et configurations décrits et illustrés ici.

L'invention concerne un véhicule automobile hybride et est définie par les revendications suivantes.

## Revendications

1. Un véhicule automobile hybride, comprenant un moteur à combustion interne (2) relié à une boîte de vitesses manuelle (1) et un moteur électrique, ces moteurs (2) participant au déplacement du véhicule, dans lequel
le boîte de vitesses manuelle (1) comprend un levier de sélection (50), le levier de sélection (50) comprenant un doigt d'engagement (54) d'au moins une vitesse de la boîte de vitesses manuelle (1),
le doigt d'engagement (54) prenant :
une première position (64) configurée pour autoriser une propulsion électrique du véhicule, correspondant à un déplacement vers l'avant du véhicule ;
une deuxième position (66) configurée pour autoriser une propulsion électrique du véhicule, correspondant à un déplacement vers l'arrière du véhicule ; et
une pluralité d'autres positions (68, 70, 72, 74) configurées pour commander une vitesse de la boîte de vitesses manuelle (1),
le levier de sélection (50) comprenant un moyen interdisant la commande d'une vitesse de la boîte de vitesses manuelle (1) lorsque le doigt d'engagement (54) est dans la première position (64).

2. Véhicule automobile hybride selon la revendication précédente, comprenant au moins un capteur de position (86) du doigt d'engagement (54) configuré pour détecter au moins la première position (64) et informer le véhicule du passage en propulsion électrique.

3. Véhicule automobile hybride selon l'une quelconque des revendications précédentes, comprenant un support rotatif (52) sur lequel est monté le doigt d'engagement (54).

4. Véhicule automobile hybride selon l'une quelconque des revendications précédentes, dans lequel le moyen interdisant la commande d'une vitesse de la boîte de vitesses manuelle (1) lorsque le doigt d'engagement (54) est dans la première position (64) prend la forme d'un secteur angulaire (76), ce secteur angulaire (76) étant adapté pour bloquer une pluralité de fourchettes d'engagement de vitesses (56, 58, 60, 62) disposées dans la boîte de vitesses manuelle (1).

5. Véhicule automobile hybride selon la revendication précédente en combinaison avec la revendication 2, dans lequel le capteur de position (86) du doigt d'engagement (54) est configuré pour détecter la deuxième position (66) et informer le véhicule du passage en propulsion électrique.

6. Véhicule automobile hybride selon l'une quelconque des revendications précédentes en combinaison avec la revendication 2, dans lequel le capteur de position (86) du doigt d'engagement (54) est configuré pour détecter la vitesse de la boîte de vitesses manuelle (1) engagée et informer le véhicule de l'utilisation de la boîte de vitesses manuelle (1).

7. Véhicule automobile hybride selon l'une quelconque des revendications précédentes en combinaison avec la revendication 2, dans lequel le capteur de position (86) est un capteur sans contact.

8. Véhicule automobile hybride selon l'une quelconque des revendications précédentes en combinaison avec la revendication 2 et 3, dans lequel le support rotatif (52) est porteur d'une piste magnétique (88), le capteur de position (86) comprenant un détecteur (90) de cette piste magnétique (88).

9. Véhicule automobile hybride selon l'une quelconque des revendications précédentes, dans lequel un système de billage (80) verrouille la première (64) et/ou la deuxième position (66) du doigt d'engagement (54).

10. Véhicule automobile hybride selon l'une quelconque des revendications précédentes, dans lequel le levier de sélection (50) est commandé par un dispositif de sélection d'un mode de propulsion du véhicule parmi un mode de propulsion par le moteur à combustion interne relié à la boîte de vitesses manuelle (1) et le mode de propulsion électrique, ce dispositif de sélection du mode de propulsion étant configuré pour être commandé par au moins un sélecteur de vitesses (51).

## Patentansprüche

1. Hybridkraftfahrzeug, einen Verbrennungsmotor (2), der mit einem Schaltgetriebe (1) verbunden ist, und einen Elektromotor umfassend, wobei diese Motoren (2) an der Bewegung des Fahrzeugs beteiligt sind, wobei
das Schaltgetriebe (1) einen Wählhebel (50) umfasst, wobei der Wählhebel (50) einen Eingriffsfinger (54) von mindestens einem Gang des Schaltgetriebes (1) umfasst,
der Eingriffsfinger (54) nimmt:
eine erste Position (64) ein, die konfiguriert ist, einen elektrischen Antrieb des Fahrzeugs zuzulassen, der einer Vorwärtsbewegung des Fahrzeugs entspricht;
eine zweite Position (66), die konfiguriert ist, einen elektrischen Antrieb des Fahrzeugs zuzulassen, der einer Rückwärtsbewegung des Fahrzeugs entspricht; und
eine Vielzahl weiterer Positionen (68, 70, 72, 74), die zur Steuerung eines Schaltgetriebes (1) konfiguriert sind,
der Wählhebel (50) ein Mittel umfasst, das die Betätigung eines Schaltgetriebes (1) verhindert, wenn sich der Eingriffsfinger (54) in der ersten Position (64) befindet.

2. Hybridkraftfahrzeug nach dem vorhergehenden Anspruch, mindestens einen Positionssensor (86) des Eingriffsfingers (54) umfassend, der konfiguriert ist, mindestens die erste Position (64) zu erfassen und das Fahrzeug über den Übergang zum elektrischen Antrieb zu informieren.

3. Hybridkraftfahrzeug nach einem der vorhergehenden Ansprüche, einen drehbaren Träger (52) umfassend, an der der Eingriffsfinger (54) montiert ist.

4. Hybridkraftfahrzeug nach einem der vorhergehenden Ansprüche, bei dem das Mittel, das die Betätigung einer Geschwindigkeit des Schaltgetriebes (1) verhindert, wenn sich der Eingriffsfinger (54) in der ersten Position (64) befindet, die Form eines Winkelsektors (76) hat, wobei dieser Winkelsektor (76) geeignet ist, eine Vielzahl von im Schaltgetriebe (1) angeordneten Schaltgabeln (56, 58, 60, 62) zu blockieren.

5. Hybridkraftfahrzeug nach dem vorhergehenden Anspruch in Kombination mit Anspruch 2, wobei der Positionssensor (86) des Eingriffsfingers (54) konfiguriert ist, die zweite Position (66) zu erfassen und das Fahrzeug über die Umstellung auf elektrischen Antrieb zu informieren.

6. Hybridkraftfahrzeug nach einem der vorhergehenden Ansprüche in Kombination mit Anspruch 2, wobei der Positionssensor (86) des Eingriffsfingers (54) konfiguriert ist, die Geschwindigkeit des eingelegten Schaltgetriebes (1) zu erfassen und das Fahrzeug über die Verwendung des Schaltgetriebes (1) informiert.

7. Hybridkraftfahrzeug nach einem der vorhergehenden Ansprüche in Kombination mit Anspruch 2, wobei der Positionssensor (86) ein berührungsloser Sensor ist.

8. Hybridkraftfahrzeug nach einem der vorhergehenden Ansprüche in Kombination mit Anspruch 2 und 3, wobei der drehbare Träger (52) einen Magnetstreifen (88) trägt, wobei der Positionssensor (86) einen Detektor (90) für diesen Magnetstreifen (88) umfasst.

9. Hybridkraftfahrzeug nach einem der vorhergehenden Ansprüche, bei dem ein Kupplungssystem (80) die erste (64) und/oder die zweite Position (66) des Eingriffsfingers (54) verriegelt.

10. Hybridkraftfahrzeug nach einem der vorhergehenden Ansprüche, bei dem der Wählhebel (50) durch ein Gerät zur Auswahl eines Fahrzeugantriebsmodus aus einem Antriebsmodus durch den mit dem Schaltgetriebe (1) verbundenen Verbrennungsmotor und einem elektrischen Antriebsmodus gesteuert wird, wobei dieses Antriebsmodus-Wählgerät konfiguriert ist, durch mindestens einen Gangwähler (51) gesteuert zu werden.

## Claims

1. A hybrid vehicle, comprising an internal combustion engine (2) connected to a manual gearbox (1) and an electric motor, these motors (2) participating in the movement of the vehicle, wherein
the manual gearbox (1) comprises a selection lever (50), the selection lever (50) comprising an engagement finger (54) for at least one gear of the manual gearbox (1), wherein the engagement finger (54) is positionable in:
a first position (64) configured to allow electric propulsion of the vehicle, corresponding to forward movement of the vehicle;
a second position (66) configured to allow electric propulsion of the vehicle, corresponding to rearward movement of the vehicle; and
a plurality of other positions (68, 70, 72, 74) configured to control a speed of the manual gearbox (1),
the selector lever (50) comprising means prohibits the engagement of a gear of the manual gearbox (1) when the engagement finger (54) is in the first position (64).

2. Hybrid vehicle according to the preceding claim, comprising at least one position sensor (86) of the engagement finger (54) configured to detect at least the first position (64) and inform the vehicle of the switch to electric propulsion.

3. Hybrid vehicle as claimed in any one of the preceding claims, comprising a rotary support (52) on which the engagement finger (54) is mounted.

4. Hybrid vehicle according to any one of the preceding claims, wherein the means prohibiting the engagement of a gear of the manual gearbox (1) when the engagement finger (54) is in the first position (64) takes the form of an angular sector (76), this angular sector (76) being adapted to lock a plurality of gear engagement forks (56, 58, 60, 62) arranged in the manual gearbox (1).

5. Hybrid vehicle as claimed in the preceding claim in combination with claim 2, wherein the position sensor (86) of the engagement finger (54) is configured to detect the second position (66) and inform the vehicle of the switch to electric propulsion.

6. Hybrid vehicle according to any one of the preceding claims in combination with claim 2, wherein the position sensor (86) of the engagement finger (54) is configured to detect the engaged gear of the manual gearbox (1) and to inform the vehicle of the use of the manual gearbox (1).

7. Hybrid vehicle according to any one of the preceding claims in combination with claim 2, wherein the position sensor (86) is a non-contact sensor.

8. Hybrid vehicle according to any one of the preceding claims in combination with claim 2 and 3, wherein the rotary support (52) carries a magnetic track (88), the position sensor (86) comprising a detector (90) of this magnetic track (88).

9. Hybrid vehicle according to any one of the preceding claims, wherein a detent ball mechanism (80) locks the first (64) and/or the second position (66) of the engagement finger (54).

10. Hybrid vehicle according to any one of the preceding claims, wherein the selection lever (50) is controlled by a device for selecting a propulsion mode of the vehicle from a propulsion mode by the internal combustion engine connected to the manual gearbox (1) and the electric propulsion mode, this propulsion mode selection device being configured to be controlled by at least one gear selector (51).
